(19) **Europäisches Patentamt / European Patent Office / Office européen des brevets**

(11) **EP 2 051 135 A1**

(12) **EUROPEAN PATENT APPLICATION**
published in accordance with Art. 153(4) EPC

(43) Date of publication:
**22.04.2009 Bulletin 2009/17**

(21) Application number: **07745254.8**

(22) Date of filing: **14.06.2007**

(51) Int Cl.:
**G02F 1/1368** (2006.01)    **G02F 1/1343** (2006.01)

(86) International application number:
**PCT/JP2007/061997**

(87) International publication number:
**WO 2008/018235 (14.02.2008 Gazette 2008/07)**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK RS**

(30) Priority: **08.08.2006 JP 2006216189**

(71) Applicant: **Sharp Kabushiki Kaisha**
**Osaka-shi, Osaka 545-8522 (JP)**

(72) Inventor: **HIRATO, Shinichi**
**Nara-shi, Nara 631 - 0033 (JP)**

(74) Representative: **Müller - Hoffmann & Partner**
**Patentanwälte**
**Innere Wiener Strasse 17**
**81667 München (DE)**

(54) **TFT SUBSTRATE, LIQUID CRYSTAL DISPLAY PANEL AND LIQUID CRYSTAL DISPLAY DEVICE HAVING THE SUBSTRATE, AND METHOD OF MANUFACTURING TFT SUBSTRATE**

(57) In a pixel (1), an oblique part of a capacitor line (Cs) includes a plurality of capacitor electrodes (2a) and a plurality of capacitor electrodes (2b), and the capacitor electrodes (2b) are provided between adjacent capacitor electrodes (2a). An insulating layer including an insulating film (6) is formed on the capacitor electrode (2b), and a pixel electrode (7) is further formed on the insulating layer. A voltage is applied across a liquid crystal between the capacitor electrode (2a) and the pixel electrode (7) so that a storage capacitance is formed which is defined by the capacitor electrode (2b) and the pixel electrode (7). By means of this, it is possible to achieve a TFT substrate, whose producing processes are simplified, for use in a liquid crystal display device in which electric field concentrating patterns of electrodes, via which a voltage is applied across a liquid crystal, are alternately provided at different heights in a thickness direction of a liquid crystal layer.

FIG. 2

EP 2 051 135 A1

**Description**

TECHNICAL FIELD

The present invention relates to a liquid crystal display device in which electric field concentrating patterns of electrodes, via which a voltage is applied across a liquid crystal, are alternately provided at different heights in a thickness direction of a liquid crystal layer.

BACKGROUND ART

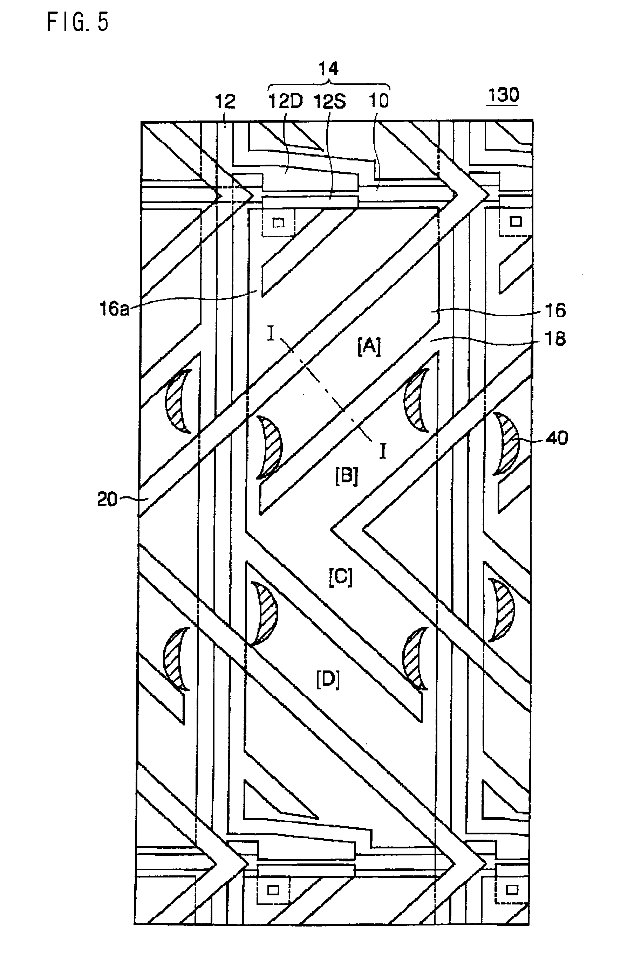

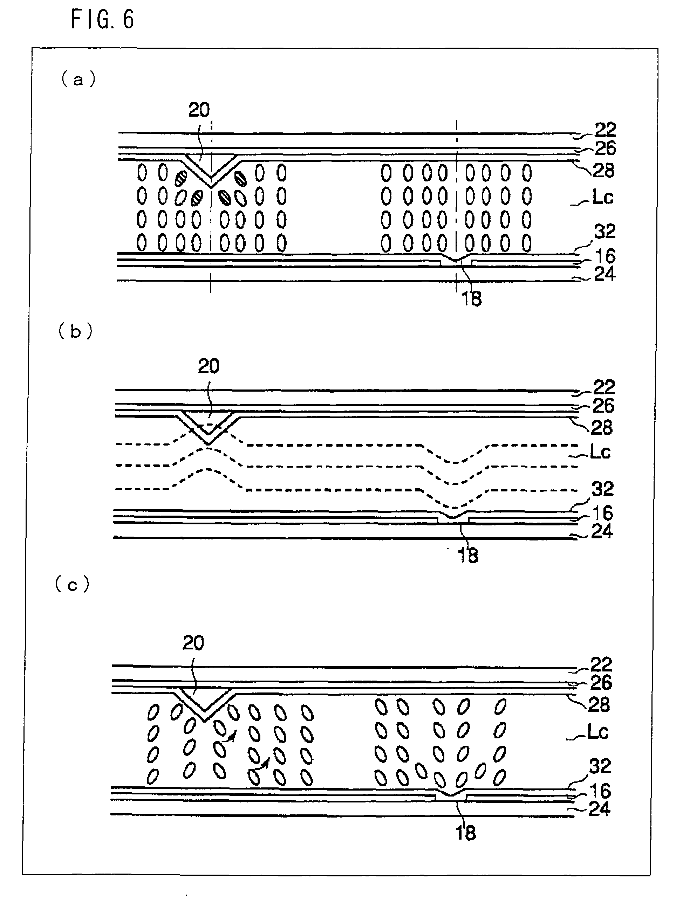

A liquid crystal display device adopting an MVA (Multi-domain Vertical Alignment) driving system achieving a wide viewing angle has been proposed. Fig. 5 shows a plane view of a pixel in a liquid crystal display device 130 adopting an MVA driving system, which is disclosed in Patent Document 1. Further, Figs. 6(a) through 6(c) are cross-sectional views of the pixel, obtained when the pixel is cut along the line I-I.

Fig. 5, which is the plane view of the pixel, shows both a TFT substrate and a color filter substrate. The TFT substrate includes a gate bus line 10, a drain bus line 12, a TFT 14, and a pixel electrode 16. The color filter substrate has a protrusion 20.

The TFT 14 has a source electrode 12S, a drain electrode 12D and a gate electrode. The source electrode 12S is connected to the pixel electrode 16, the drain electrode 12D is connected to the drain bus line 12, and the gate electrode is connected to the gate bus line 10.

In the pixel electrode 16, a slit 18 is provided so as to extend obliquely in a pixel region. The slit 18 is arranged so as to control an alignment of liquid crystal on a TFT substrate side. Further, in the pixel electrode 16, a connecting section 16a is provided so that the pixel electrode 16 is not electrically separated by the slit 18. This ensures an electric connection of the pixel electrode 16 in one pixel.

The protrusion 20 is arranged so as to control an alignment of liquid crystal on a color filter substrate side. Thus, the slit 18 and the protrusion 20 control the alignment of the liquid crystal. The protrusion 20 is made of an insulator (dielectric) such as a resist.

Further, as is apparent from Figs. 6(a) through 6(c), it is arranged on the TFT substrate side such that the pixel electrode 16 is formed on a glass substrate 24, and an alignment film (vertical alignment film) 32 is formed so as to cover the pixel electrode 16 and the slit 18 formed on the pixel electrode 16. It is arranged on the color filter substrate side such that a storage capacitor electrode 26 is formed over a glass substrate 22 so as to face the pixel electrode 16, the protrusion 20 is formed on the storage capacitor electrode 26, and an alignment film (vertical alignment film) 28 is further formed so as to cover the storage capacitor electrode 26 and the protrusion 20. Moreover, a liquid crystal layer LC is provided between the TFT substrate and the color filter substrate. Note that a reference numeral 40 in Fig. 5 indicates a region where the liquid crystal exhibits an inadequate alignment.

Fig. 6(a) shows a state in which no voltage is applied across the liquid crystal between electrodes of a pair of substrates. Liquid crystal molecules align perpendicularly to the alignment films 32 and 28. Therefore, the liquid crystal molecules also align perpendicularly to the alignment film 28 formed on a surface of the protrusion 20. This causes liquid crystal molecules located near the surface of the protrusion 20 to become oblique to the glass substrate 22. In addition, a pair of polarizing plates (not shown) is provided outside the glass substrates 22 and 24, respectively, so as to realize a crossed Nicols state. This causes a black display to be carried out when no voltage is applied across the liquid crystal.

Fig. 6(b) shows equipotential lines generated in a case where a voltage is applied across the liquid crystal between the electrodes of the pair of substrates. When a voltage is applied between the electrodes 16 and 26, an electric field distribution in an area where the slit 18 and the protrusion 20 are formed becomes different from that in other areas.

Fig. 6(c) shows a state in which a voltage is applied across the liquid crystal between the electrodes of the pair of substrates. The liquid crystal molecules incline, in accordance with the voltage to be applied, to a direction indicated by arrows in Fig. 6(c), that is, a direction perpendicular to a direction of the electric field. This causes a white display to be carried out when the voltage is applied across the liquid crystal. In this regard, when the protrusion 20 is linearly provided as shown in Fig. 5, liquid crystal molecules located near the protrusion 20 incline to two directions that are substantially perpendicular to a direction to which the protrusion 20 is provided, the protrusion 20 forming a border of the inclination in the two directions of the liquid crystal molecules. Similarly, liquid crystal molecules located near the slit 18 incline in two directions substantially perpendicular to a direction in which the slit 18 is provided, the slit 18 forming a border of the inclination in the two directions of the liquid crystal molecules.

In this way, in a region between two dashed-dotted lines shown in Fig. 6(a) (region indicated by [A] in Fig. 5), there is formed a region where the liquid crystal molecules incline to a single direction, that is, a region where the liquid crystal molecules align in a single direction. Further, as indicated representatively by [A] through [D] in Fig. 5, four regions where the liquid crystal molecules are aligned in different directions are formed in a single pixel. This allows an MVA-mode liquid crystal display device 130 to attain wide viewing angle characteristics.

Patent Document 2 discloses a liquid crystal display device in which comb-shaped electrodes are alternately provided at an upper and lower parts of a liquid crystal layer. Patent Document 3 discloses a liquid crystal display device, adopting an IPS driving system, in which comb-teeth electrodes are alternately provided at an upper and lower parts of a liquid crystal layer.

[Patent Document 1]
Japanese Unexamined Patent Publication No. 2001-83517 (Tokukai 2001-83517, publication date: March 30, 2001)
[Patent Document 2]
Japanese Unexamined Patent Publication No. 9-244046 (Tokukaihei 9-244046, publication date: September 19, 1997)
[Patent Document 3]
Japanese Unexamined Patent Publication No. 2000-56325 (Tokukai 2000-56325, publication date: February 25, 2000)

DISCLOSURE OF INVENTION

However, in a liquid crystal display device adopting an MVA driving system, including a device of Patent Document 1, it is generally necessary that a TFT substrate include five layers of a gate electrode layer or a storage capacitor line layer, an amorphous silicon layer, a source electrode layer, an insulating layer, and a transparent electrode layer. It is also necessary that a color filter substrate include, in addition to a black matrix, three layers of a RGB color layer, a transparent electrode layer, and a protrusion layer. This causes the problem that producing processes become complicated due to the provision of a large number of layers.

Moreover, the same problem arises in liquid crystal display devices of Patent Documents 2 and 3.

The present invention is accomplished in view of the problem above, and an object of the present invention is to achieve a TFT substrate, whose producing processes are simplified, for use in a liquid crystal display device in which electric field concentrating patterns of electrodes, via which a voltage is applied across a liquid crystal, are alternately provided at different heights in a thickness direction of a liquid crystal layer, a liquid crystal display panel and a liquid crystal display device each having the TFT substrate, and a method for producing the TFT substrate.

In view of the problem above, the TFT substrate of the present invention is a TFT substrate, for use in a liquid crystal display panel driven by a scanning signal line driving circuit and a data signal line driving circuit, having TFTs, scanning signal lines, and data signal lines, wherein, in each pixel: a plurality of first electrodes for applying voltage are provided along a substrate surface at intervals; second electrodes for applying voltage are provided along the substrate surface, the second electrodes being provided between adjacent first electrodes so as to be at a higher height from the substrate surface than the first electrodes; third electrodes that are connected to the first electrodes are provided, respectively, on the substrate surface side of the second electrodes; and when a TFT turns on in response to a voltage via a scanning signal line, a data signal line is connected to a second electrode so that (i) a voltage is applied across a liquid crystal between the first electrodes and the second electrodes and (ii) no voltage is applied across the liquid crystal between the first electrodes and the third electrodes.

According to the TFT substrate, in each pixel, the electrodes for applying voltage across a liquid crystal are provided on a TFT substrate as the first electrodes and the second electrodes. A plurality of the first electrodes are provided along a substrate surface at intervals. Moreover, the second electrodes are provided along the substrate surface and between adjacent first electrodes so as to be at a higher height from the substrate surface than the first electrodes. Further, the third electrodes that are connected to the first electrodes are provided, respectively, on the substrate surface side of the second electrodes.

Further, when a TFT turns on in response to a voltage via a scanning signal line, a data signal line is connected to a second electrode so that (i) a voltage is applied across a liquid crystal between the first electrodes and the second electrodes and (ii) no voltage is applied across the liquid crystal between the first electrodes and the third electrodes.

Therefore, when a TFT turns on in response to a voltage via a scanning signal line, resulting in that a data signal line is connected to a second electrode so that a voltage is applied across a liquid crystal between the first and second electrodes, the first and second electrodes function as electrodes on which electric field is concentrated.

In this regard, the electrode on which electric field is concentrated means an electrode that generates an electric potential difference, existing between an upper and lower position in a thickness direction of a cell, between the first electrodes and the second electrodes.

In addition, the first electrodes and the third electrodes are connected to each other so as to function as such electrodes that no voltage is applied across the liquid crystal between them.

Therefore, it is possible to realize an arrangement in which a voltage is applied across a liquid crystal in a thickness direction of a liquid crystal layer, only by forming the first electrodes, an insulating layer extending from the substrate surface to the second electrodes, and the second electrodes, by further forming a vertical alignment film, and then by filling with a liquid crystal having negative dielectric anisotropy. Moreover, it is not necessary to provide an electrode on a substrate which is provided so as to face the TFT substrate.

With the arrangement described above, it is possible to achieve a TFT substrate, whose producing processes are simplified, for use in a liquid crystal display device in which electric field concentrating patterns of electrodes, via which a voltage is applied across a liquid crystal, are alternately provided at different heights in the thickness direction of the liquid crystal layer.

In view of the problem above, the TFT substrate of the present invention is arranged so that the third electrodes are provided on the substrate surface side of the second electrodes, via an insulating layer.

With the arrangement above, the third electrodes connected to the first electrodes form a capacitance between the second electrodes and the third electrodes via the insulating layer. As such, it is possible to provide an electrode which functions as a storage capacitor electrode.

In view of the problem above, the TFT substrate of the present invention is a TFT substrate, for use in a liquid crystal display panel driven by a scanning signal line driving circuit and a data signal line driving circuit, having TFTs, scanning signal lines, and data signal lines, wherein, in each pixel: a plurality of first electrodes for applying voltage are provided along a substrate surface at intervals; second electrodes for applying voltage are provided along the substrate surface, the second electrodes being provided between adjacent first electrodes so as to be at a higher height from the substrate surface than the first electrodes; when a TFT turns on in response to a voltage via a scanning signal line, a data signal line is connected to a second electrode so that a voltage is applied across a liquid crystal between the first electrodes and the second electrodes; and the first electrodes are transparent electrodes, and are provided so as to cover a protruding insulator and the substrate surface located around the insulator.

According to the TFT substrate, in each pixel, the electrodes for applying voltage across a liquid crystal are provided on a TFT substrate as the first electrodes and the second electrodes. A plurality of the first electrodes are provided along a substrate surface at intervals. Moreover, the second electrodes are provided along the substrate surface and between adjacent first electrodes so as to be at a higher height from the substrate surface than the first electrodes.

Further, when a TFT turns on in response to a voltage via a scanning signal line, a data signal line is connected to a second electrode so that a voltage is applied across a liquid crystal between the first electrodes and the second electrodes.

Therefore, when a TFT turns on in response to a voltage via a scanning signal line, resulting in that a data signal line is connected to a second electrode so that a voltage is applied across a liquid crystal between the first and second electrodes, the first and second electrodes function as electrodes on which electric field is concentrated.

In this regard, the electrode on which electric field is concentrated means an electrode that generates an electric potential difference, existing between an upper and lower position in a thickness direction of a cell, between the first electrodes and the second electrodes.

Therefore, it is possible to realize an arrangement in which a voltage is applied across a liquid crystal in a thickness direction of a liquid crystal layer, only by forming the first electrodes, an insulating layer extending from the substrate surface to the second electrodes, and the second electrodes, by further forming a vertical alignment film, and then by filling with a liquid crystal having negative dielectric anisotropy. Moreover, it is not necessary to provide an electrode on a substrate which is provided so as to face the TFT substrate.

With the arrangement described above, it is possible to achieve a TFT substrate, whose producing processes are simplified, for use in a liquid crystal display device in which electric field concentrating patterns of electrodes, via which a voltage is applied across a liquid crystal, are alternately provided at different heights in the thickness direction of the liquid crystal layer.

Further, when the electric field is generated between the first electrodes and the second electrodes, the range of electric flux lines widely extends in a director direction in which the liquid crystal molecules incline. This causes an increase in number of the liquid crystal molecules that contribute to a display. Moreover, since transparent electrodes are used, light entering from the backside of the TFT substrate is not interrupted. As a result, the present invention attains such an effect that the brightness of a display is dramatically improved.

In view of the problem above, the TFT substrate of the present invention is a TFT substrate, for use in a liquid crystal display panel driven by a scanning signal line driving circuit and a data signal line driving circuit, having TFTs, scanning signal lines, and data signal lines, wherein, in each pixel: a plurality of first electrodes for applying voltage are provided along a substrate surface at intervals; second electrodes for applying voltage are provided along the substrate surface, the second electrodes being provided between adjacent first electrodes so as to be at a higher height from the substrate surface than the first electrodes; when a TFT turns on in response to a voltage via a scanning signal line, a data signal line is connected to a second electrode so that a voltage is applied across a liquid crystal between the first electrodes and the second electrodes; and the first electrodes are transparent electrodes, and are provided so as to be in a planar form on the substrate surface between adjacent second electrodes.

According to the TFT substrate, in each pixel, the electrodes for applying voltage across a liquid crystal are provided on a TFT substrate as the first electrodes and the second electrodes. A plurality of the first electrodes are provided along a substrate surface at intervals. Moreover, the second electrodes are provided along the substrate surface and between adjacent first electrodes so as to be at a higher height from the substrate surface than the first electrodes.

Further, when a TFT turns on in response to a voltage via a scanning signal line, a data signal line is connected to a second electrode so that a voltage is applied across a liquid crystal between the first electrodes and the second electrodes.

Therefore, when a TFT turns on in response to a voltage via a scanning signal line, resulting in that a data signal line is connected to a second electrode so that a voltage is applied across a liquid crystal between the first and second electrodes, the first and second electrodes function as electrodes on which electric field is concentrated.

In this regard, the electrode on which electric field is concentrated means an electrode that generates an electric potential difference, existing between an upper and lower position in a thickness direction of a cell, between the first electrodes and the second electrodes.

Therefore, it is possible to realize an arrangement in which a voltage is applied across a liquid crystal in a thickness direction of a liquid crystal layer, only by forming the first electrodes, an insulating layer extending from the substrate surface to the second electrodes, and the second electrodes, by further forming a vertical alignment film, and then by filling with a liquid crystal having negative dielectric anisotropy. Moreover, it is not necessary to provide an electrode on a substrate which is provided so as to face the TFT substrate.

With the arrangement described above, it is possible to achieve a TFT substrate, whose producing processes are simplified, for use in a liquid crystal display device in which electric field concentrating patterns of electrodes, via which a voltage is applied across a liquid crystal, are alternately provided at different heights in the thickness direction of the liquid crystal layer.

Further, when the electric field is generated between the first electrodes and the second electrodes, the range of electric flux lines widely extends in a director direction in which the liquid crystal molecules incline. This causes an increase in number of the liquid crystal molecules that contribute to a display. Moreover, since transparent electrodes are used, light entering from the backside of the TFT substrate is not interrupted. As a result, the present invention attains such an effect that the brightness of a display is dramatically improved.

In view of the problem above, the TFT substrate of the present invention is arranged so that the liquid crystal is a liquid crystal driven in a vertical alignment mode.

With the arrangement, it is possible to carry out a good control on an alignment of the liquid crystal molecules by an electric field formed between the first electrodes and the second electrodes.

In view of the problem above, the TFT substrate of the present invention is arranged so that the liquid crystal layer has a thickness of not less than $2.8\mu$m and not more than $10\mu$m.

With the arrangement, the liquid crystal layer has a thickness with which a good display can be carried out with the first electrodes and the second electrodes being provided.

In view of the problem above, the method for producing the TFT substrate of the present invention is a method for producing a TFT substrate having the third electrodes, including: concurrently forming, with a same material, the first electrodes, the third electrodes, the scanning signal lines, and gate electrodes of the TFTs; and forming the second electrodes with the same material as the scanning signal lines after forming the first electrodes.

According to the method, the first electrodes, the third electrodes, the scanning signal lines, and gate electrodes of the TFTs are concurrently formed with a same material, and the second electrodes are formed with the same material as the scanning signal lines after the first electrodes are formed. Therefore, it is possible to easily reduce the whole number of layers on the TFT substrate and to easily simplify the process.

In view of the problem above, the method for producing the TFT substrate of the present invention further includes: concurrently forming, with a same material, (i) an insulating film which is part of an insulating layer between the second electrodes and the third electrodes and is subsequently formed after the third electrodes are formed and (ii) a gate insulating film of the TFTs.

With the arrangement, the insulating film which is subsequently formed after the third electrodes, and the gate insulating film of the TFTs are concurrently formed with a same material. Therefore, even in a case of forming the third electrodes, it is possible to easily reduce the whole number of layers on the TFT substrate and to easily simplify the process.

In view of the problem above, the liquid crystal display panel of the present invention is a liquid crystal display panel having the TFT substrate.

With the liquid crystal display panel, it is possible to achieve a liquid crystal display panel, whose producing processes are simplified, having a TFT substrate for use in a liquid crystal display device in which electric field concentrating patterns of electrodes, via which a voltage is applied across a liquid crystal, are alternately provided at different heights in the thickness direction of the liquid crystal layer.

In view of the problem above, the liquid crystal display device of the present invention is a liquid crystal display device having the liquid crystal display panel.

With the liquid crystal display device, it is possible to achieve a liquid crystal display device, whose producing processes are simplified, in which electric field concentrating patterns of electrodes, via which a voltage is applied across a liquid crystal, are alternately provided at different heights in the thickness direction of the liquid crystal layer.

In view of the problem above, the liquid crystal display device of the present invention is arranged so that the liquid crystal display panel is composed of a combination of the TFT substrate and a counter substrate that does not include a counter electrode facing the TFT substrate; and the liquid crystal is driven in an MVA mode.

With the arrangement, it is possible to provide a liquid crystal display device, adopting an MVA driving system, in which a counter substrate has a simplified arrangement. This is based on the following fact. The liquid crystal can be driven in an MVA driving mode by causing the liquid crystal layer to have multiple domains while the electric field generated, in a direction oblique to the thickness direction of the liquid crystal layer, between the first electrodes and the second electrodes on the TFT substrate side is used. As such, it is possible to provide such a liquid crystal display device, by driving the liquid crystal without providing any counter electrode on the counter substrate.

In view of the problem above, the liquid crystal display device of the present invention is arranged so that: on the TFT substrate, the first electrodes and the second electrodes are provided along the substrate surface so as to run parallel to each other; and the counter substrate does not include a structure for controlling an alignment of liquid crystal molecules.

With the arrangement, the first electrodes and the second electrodes are provided so as to extend in parallel with each other on the TFT substrate. Therefore, it is possible to generate the oblique electric field, having a distribution whose direction and intensity are uniform in the direction in which the first and second electrodes extend, between adjacent first and second electrodes. In consequent, the liquid crystal molecules incline in the same direction in a region between adjacent first and second electrodes so that a domain is formed in this region. Further, the liquid crystal molecules in the adjacent regions incline in directions opposite to each other because the oblique electric field in a region and that in an adjacent region become axisymmetric. This allows different domains to be formed in the adjacent regions, respectively. Therefore, it is possible to easily cause the liquid crystal layer to have multiple domains. By omitting an arrangement, in the counter substrate, for controlling an alignment of liquid crystal, it is possible to provide a liquid crystal display device, adopting an MVA driving system, which has an extremely simplified arrangement.

In view of the problem above, the liquid crystal display device of the present invention is arranged so that no horizontal electric field parallel to the substrate surface that causes the liquid crystal molecules to align is generated in a region that (i) is between the first electrodes and the second electrodes and (ii) is closer to the substrate surface than the second electrodes.

With the arrangement, by causing no horizontal electric field, which allows the liquid crystal molecules to align, parallel to the substrate surface to be generated in a region which is closer to the substrate surface than the second electrode, between the first and second electrodes, that is, in a region where the liquid crystal molecules contributing to a display exist, it is possible to avoid that a region where the liquid crystal molecules perpendicularly align occurs although a voltage is applied between the first electrodes and the second electrodes. Thus, it is possible to achieve a high-quality display in an MVA mode.

Additional objects, features, and strengths of the present invention will be made clear by the description below. Further, the advantages of the present invention will be evident from the following explanation in reference to the drawings.

BRIEF DESCRIPTION OF DRAWINGS

Fig. 1 shows an embodiment of the present invention, and is a plane view showing an arrangement of a pixel.

Fig. 2 is a cross-sectional view of a pixel shown in Fig. 1. Fig. 2(a) is a view showing a cross-section obtained when the pixel is cut along the line A-B. Fig. 2(b) is a view showing a cross-section obtained when the pixel is cut along the line C-D. Fig. 2(c) is a view showing a cross-section obtained when the pixel is cut along the line E-F.

Fig. 3 is a view showing processes of a method for producing a TFT substrate. Figs. 3(a) through 3(e) show the processes proceeded in this order.

Fig. 4 is a block diagram showing an arrangement of a liquid crystal display device having pixels shown in Fig. 1.

Fig. 5 shows a conventional technique, and is a plane view showing an arrangement of a pixel.

Fig. 6 is a cross-sectional view showing an arrangement and acting manner of a pixel shown in Fig. 5. Fig. 6(a) shows a state in which no voltage is applied across a liquid crystal. Fig. 6(b) shows equipotential lines generated in a case where a voltage is applied across a liquid crystal. Fig. 6(c) shows a state in which a voltage is applied across a liquid crystal.

Fig. 7 is a view showing a drive principle of a conventional pixel arrangement. Fig. 7(a) shows an equivalent circuit. Fig. 7(b) shows a drive potential waveform.

Fig. 8 is a view showing a drive principle of a pixel arrangement of the present embodiment. Fig. 8(a) shows an equivalent circuit. Fig. 8(b) shows a drive potential waveform.

Fig. 9 is a view showing a response of a liquid crystal in a pixel of a first electrode arrangement among arrangements of the present embodiment. Fig. 9(a) shows a state in which no voltage is applied across the liquid crystal. Fig. 9 (b) shows a state in which a voltage is applied across the liquid crystal.

Fig. 10 is a view showing a response of a liquid crystal in a pixel of a second electrode arrangement among arrangements of the present embodiment. Fig. 10(a) shows a state in which no voltage is applied across the liquid crystal. Fig. 10(b) shows a state in which a voltage is applied across the liquid crystal.

Fig. 11 is a view showing a response of a liquid crystal in a pixel of a third electrode arrangement among arrangements of the present embodiment. Fig. 11(a) shows a state in which no voltage is applied across the liquid crystal. Fig. 11 (b) shows a state in which a voltage is applied across the liquid crystal.

[Description of reference numerals]

1: PIXEL
2: GATE ELECTRODE
2a: CAPACITOR ELECTRODE (FIRST ELECTRODE FOR APPLYING VOLTAGE
2b: CAPACITOR ELECTRODE (THIRD ELECTRODE)
3: INSULATING LAYER, GATE INSULATING LAYER
6: TRANSPARENT INSULATING LAYER
7: PIXEL ELECTRODE (SECOND ELECTRODE FOR APPLYING VOLTAGE)
7a: SOURCE ELECTRODE
7b: DRAIN ELECTRODE
52: CAPACITOR ELECTRODE (FIRST ELECTRODE FOR APPLYING VOLTAGE)
61: CAPACITOR ELECTRODE (FIRST ELECTRODE FOR APPLYING VOLTAGE)
400: GATE DRIVER (SCANNING SIGNAL LINE DRIVING CIRCUIT)
300: SOURCE DRIVER (DATA SIGNAL LINE DRIVING CIRCUIT)
GL: GATE LINE (SCANNING SIGNAL LINE)
SL: SOURCE LINE (DATA SIGNAL LINE)

BEST MODE FOR CARRYING OUT THE INVENTION

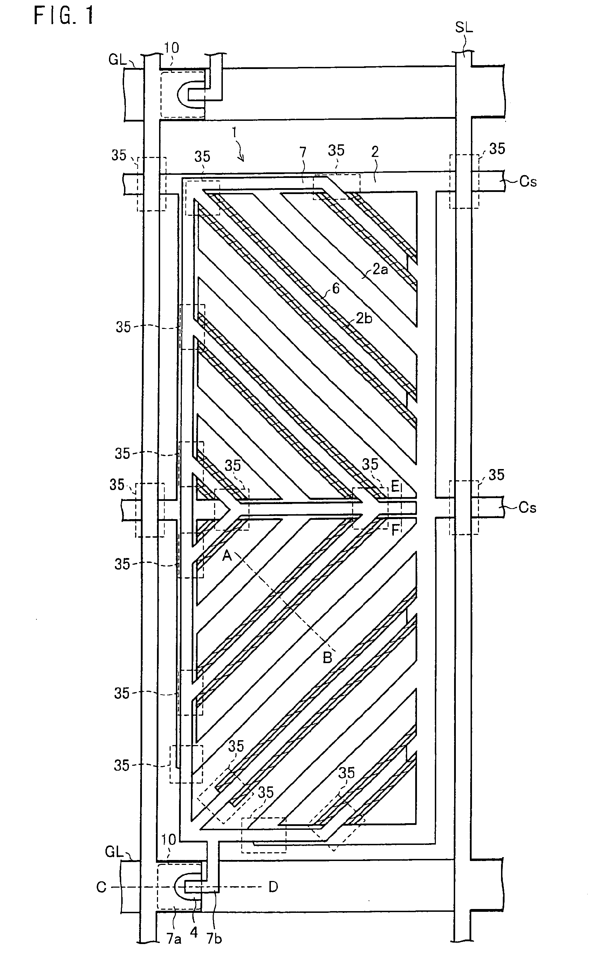

One embodiment of the present invention is described below with reference to Figs. 1 through 4 and Figs. 7 through 9.

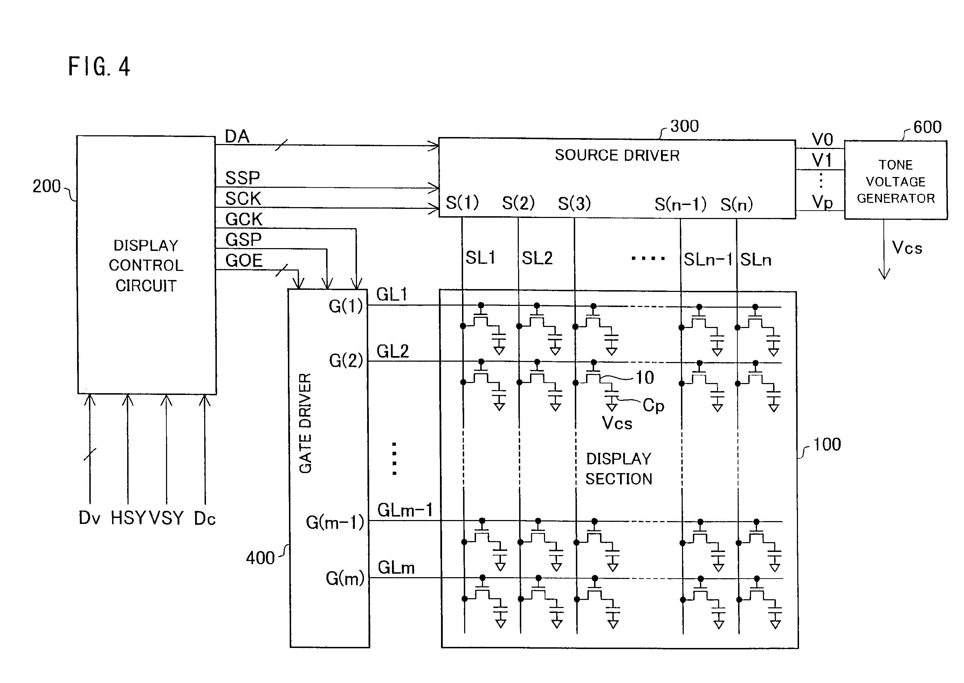

Fig. 4 is a block diagram showing an arrangement of a liquid crystal display device together with an equivalent circuit of a display section of the liquid crystal display device. The liquid crystal display device includes a source driver 300 served as a data signal line driving circuit, a gate driver 400 served as a scanning signal line driving circuit, an active matrix display section 100, a display control circuit 200 for controlling the source driver 300 and the gate driver 400, and a tone voltage generator 600.

The display section 100 in the liquid crystal display device includes a plurality of gate lines GL1 through GLm (m: positive integer) served as scanning signal lines, a plurality of source lines SL1 through SLn (n: positive integer) served as data signal lines, each of which intersects with the gate lines GL1 through GLm, and a plurality of pixel forming sections (mxn pixel forming sections) are provided so as to correspond to intersections of the gate lines GL1 through GLm and the source lines SL1 through SLn. The pixel forming sections are provided in a matrix manner so as to form a pixel array. Each of the pixel forming sections includes a TFT 10 which is a switching element with a gate terminal connected to a gate line GLj passing through a respective one of the intersections and with a source terminal connected to a source line Sli passing through the respective one of the intersections, a pixel electrode (second electrode for applying voltage) connected to a drain terminal of the TFT 10, capacitor electrodes (there are two types: a first electrode for applying voltage; and a third electrode, as described later) which are electrodes provided so as to be shared with the plurality of pixel forming sections, and a liquid crystal layer which are provided so as to be shared with the plurality of pixel forming sections and provided between the pixel electrode and the capacitor electrode served as the first electrode for applying voltage. Further, a pixel capacitor Cp includes a liquid crystal capacitor between the pixel electrode and the capacitor electrode served as the first electrode, and a storage capacitor between the pixel electrode and the capacitor electrode served as the third electrode. The capacitor electrode served as the first electrode is connected to the capacitor electrode served as the third electrode, and a voltage Vcs is applied between them. Note that the storage capacitor is provided in parallel with the liquid crystal capacitor so that the pixel capacitor surely holds a voltage. The present embodiment is not limited to this. Namely, instead of forming the storage capacitor, the third electrode can be provided below the pixel electrode so that the third electrode and the pixel electrode are tied in a bundle. This allows a capacitance of the pixel electrode itself to become greater.

An electric potential which varies according to an image to be displayed is supplied to the pixel electrode in each of the pixel forming sections by the source driver 300 and the gate driver 400. This causes a voltage to be applied across a liquid crystal in accordance with an electric potential difference between the pixel electrode and the capacitor electrode served as the first electrode. This causes the amount of light transmitting the liquid crystal layer to be controlled, thereby resulting in that the image is displayed. Note that a polarizing plate should be provided when the amount of light transmitting the liquid crystal layer is controlled in accordance with a voltage applied across the liquid crystal. The liquid crystal display device of the present invention includes a wave plate and a polarizing plate so as to realize the normally-black.

The display control circuit 200 receives, from an external signal source, a digital video signal Dv indicative of an image to be displayed, a horizontal sync signal HSY and a vertical sync signal VSY that correspond to the digital video signal Dv, and a control signal Dc for controlling a display operation. Based on the signals Dv, HSY, VSY, and Dc, the display control circuit 200 generates and outputs the following signals as signals for causing the display section 100 to display an image corresponding to the digital video signal Dv: a source start pulse signal SSP, a source clock signal SCK, a digital image signal DA (a signal corresponding to the digital video signal Dv) indicative of the image to be displayed, a gate start pulse signal GSP, a gate clock signal GCK, and a gate driver output controlling signal GOE.

The digital video signal Dv is outputted as the digital image signal DA from the display control circuit 200 after having been subjected to a timing adjustment in an internal memory if necessary. The source clock signal SCK is generated as a signal for determining the timing at which a shift register in the source driver 300 operates. The source start pulse signal SSP is generated as a signal which is transmitted in the shift register. The source start pulse signal SSP is changed to a high level (H level), only during a certain period for every horizontal scanning period, based on the horizontal sync signal HSY. The gate start pulse signal GSP is generated as a signal which is changed to an H level, only during a certain period for every frame period (one vertical scanning period), based on the vertical sync signal VSY. The gate clock signal GCK is generated based on the horizontal sync signal HSY. The gate driver output controlling signal GOE (GOE1 through GOEq) is generated based on the horizontal sync signal HSY and the control signal Dc.

Among the signals generated in the display control circuit 200 as described above, the digital image signal DA, the source start pulse signal SSP, and the source clock signal SCK are supplied to the source driver 300, whereas the gate start pulse signal GSP, the gate clock signal GCK, and the gate driver output controlling signal GOE are inputted to the gate driver 400.

Based on the source start pulse signal SSP, the source clock signal SCK, and the digital image signal DA, the source driver 300 sequentially generates, for every horizontal scanning period, data signals S(1) through S(n) as analog voltages corresponding to pixel values, for horizontal scanning lines, of an image that corresponds to the digital image signal DA, respectively. Then, the data signals S(1) through S(n) are supplied to the source lines SL1 through SLn, respectively. Voltages V0 through Vp generated by the tone voltage generator 600 are used as tone reference voltages from which the analog voltage signals S(1) through S(n) are selected. The tone voltage generator 600 also generates and outputs a voltage Vcs to be applied to the capacitor electrodes.

The gate driver 400 sequentially selects, during each frame period (each vertical scanning period) of the digital image signal DA, the gate lines GL1 through GLm for substantially every horizontal scanning period. This causes the data signals S(1) through S(n) to be written into the pixel forming sections (the pixel capacitors in the pixel forming sections), based on the gate start pulse signal GSP, the gate clock signal GCK, and the gate driver output signal GOEr (r=1,2,⋯,q).

The following description deals in detail with how a pixel structure of the liquid crystal display device is arranged.

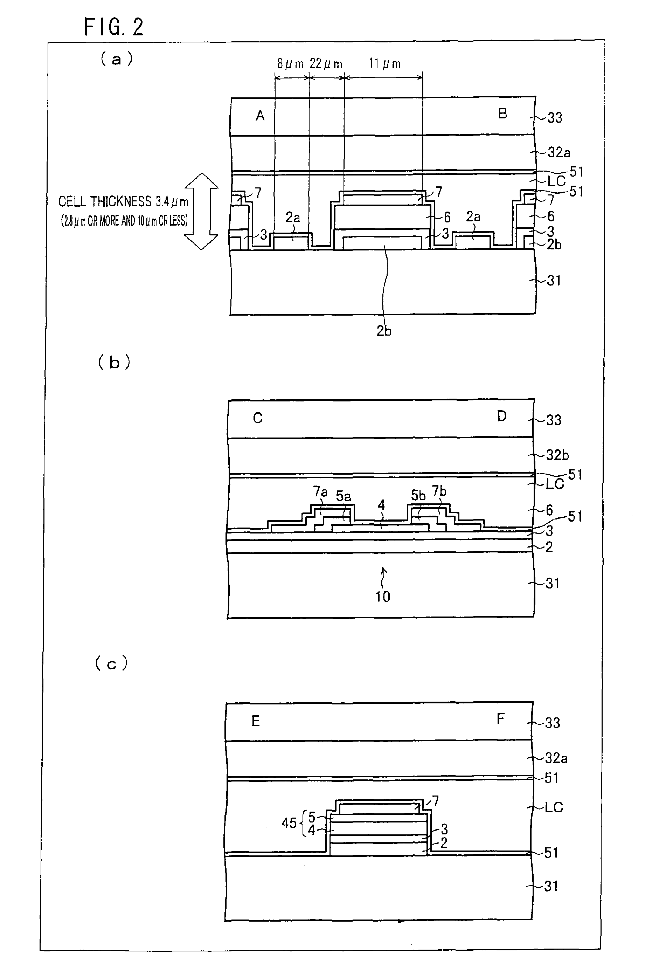

Fig. 1 is a plane view of a pixel 1 in each of the pixel forming sections. Fig. 2(a) is a cross-sectional view obtained when the pixel is cut along the line A-B shown in Fig. 1. Fig. 2(b) is a cross-sectional view obtained when the pixel is cut along the line C-D shown in Fig. 1. Fig. 2(c) is a cross-sectional view obtained when the pixel is cut along the line E-F.

As shown in Fig. 1, the pixel 1 is provided as a rectangular region surrounded with adjacent two gate lines GL and adjacent two source lines SL. Note that the following pattern formation is carried out on a TFT substrate. A capacitor line Cs, via which a voltage Vc is applied to capacitor electrodes 2a served as first electrodes for applying voltage and to capacitor electrodes 2b served as third electrodes, is provided so as to (i) extend in parallel with the gate lines GL and (ii) cross the central part of the pixel 1. Further, the capacitor line Cs leads around in each of the pixels so that a rectangular region surrounding parts 2 surround the periphery of the rectangular region in the pixel 1.

Inside the rectangular region surrounding part 2, the capacitor line Cs is linearly drawn around so as to extend, obliquely with respect to the gate line GL and the source line SL, from the rectangular region surrounding part 2. Further, the oblique parts of the capacitor line Cs, which are thus obliquely extended in regions on both sides of the capacitor line Cs extending in parallel with the gate lines GL and crossing the central part of the pixel 1, are provided so as to become axisymmetric. As shown in Fig. 2(a), the oblique parts of the capacitor lines Cs include a plurality of the capacitor electrodes (the first electrodes) 2a and a plurality of the capacitor electrodes (the third electrodes) 2b. The plurality of the capacitor electrodes 2a are provided on a glass substrate 31 at intervals. For example, the capacitor electrode 2a has a line width of 8μm and a pitch of 63μm, at intervals of 55μm. The capacitor electrodes 2b are provided between the adjacent two capacitor electrodes 2a. The capacitor electrodes 2a and 2b have a thickness of 0.4μm, for example.

The capacitor electrodes 2a and 2b are made of Ti/Al/Ti or TiN/Al/Ti, which is the same material as a gate electrode 2 (gate line GL) of a TFT 10 shown in Fig. 2(b). The capacitor electrodes 2a and 2b, the gate electrode 2 of the TFT 10, and the gate lines GL are concurrently formed.

Insulating films 3 are formed on the capacitor electrodes 2b so as to cover the capacitor electrodes 2b, respectively. Insulating films 6 made of a transparent insulating film (JAS) capable of being increased in thickness are provided on the insulating films 3, respectively. Pixel electrodes (second electrode for applying voltage) 7 are further provided on the insulating films 6, respectively. For example, the insulating film 3 and the insulating film 6 have thicknesses of 0.3μm and 1.9μm, respectively. The pixel electrodes 7 are provided on the glass substrate 31 via the insulating films 3 and 6 so as to be at a higher height from the glass substrate 31 than the capacitor electrodes 2a. In this way, the plurality of the pixel electrodes 7 are provided on the glass substrate 31. The pixel electrode 7 has a line width of 11μm and a thickness of 0.18μm, for example. Note that, when the capacitor electrodes 2b are provided below the pixel electrode 7 so that the capacitor electrode 2b and the pixel electrode 7 are tied in a bundle, the pixel electrodes 7 should be provided on the glass substrate 31 via only an insulating film such as the insulating film 6.

The insulating films 3 are made of the same material as the gate insulating films (gate insulator) 3 of the TFTs 10 shown in Fig. 2(b). The insulating films 3 and the gate insulating films 3 are concurrently formed. Further, in the TFTs 10, channel forming regions 4 made of an i layer (intrinsic semiconductor layer) of amorphous silicon are formed on the gate insulating films 3. Source regions 5a and drain regions 5b made of n$^+$ layer of microcrystal silicon are formed on both ends of the channel forming regions 4. The channel forming region 4 has a thickness of 0.23μm, and the source region 5a and the drain region 5b has a thickness of 0.06μm. Source electrodes 7a and drain electrodes 7b are provided on the source regions 5a and the drain regions 5b, respectively. Outer surfaces of the source regions 5a and the drain regions 5b function as an ohmic contact layer for the electrodes. The pixel electrodes 7 are made of Ti/Al/Ti or TiN/Al/Ti, which is the same material as the gate lines GL. The pixel electrodes 7, the source electrodes 7a, and the drain electrodes 7b are concurrently formed. Further, as shown in Fig. 2(b), insulating films 3 are formed on gate lines GL on which no TFT 10 is provided.

Further, regions 35 shown in Fig. 1 include (i) regions where the capacitor line Cs and the source lines SL intersect with each other and (ii) regions where the capacitor line Cs and the pixel electrodes 7 intersect with each other. The regions 35 are formed as a rectangular region having 4 sides each longer than the intersecting lines. As shown in Fig. 2(c), in the region 35, and in regions where the rectangular region surrounding part 2 of the capacitor line Cs and the pixel electrode 7 overlap each other, (i) the insulating film 3, (ii) a stack 45 including an i-layer used in the channel forming region 4 of the TFT 10 and n$^+$ layer used in the source region 5a and the drain region 5b of the TFT 10, and (iii) the source line SL (or the pixel electrode 7) are stacked in this order on the capacitor line Cs (or the rectangular surrounding part 2).

On a color filter substrate (counter substrate) using a glass substrate 33, (i) a color filter layer 32a made of color resists (red, green, blue, and the like) corresponding to each of the pixels and (ii) a black matrix layer 32b are provided so as to face a TFT substrate using a glass substrate 31. As shown in Fig. 2(b), the black matrix layer 32b is provided in a region facing the TFT 10. As shown in Figs. 2(a) and 2(c), the color filter layer 32a is provided in a region facing regions other than the region facing the TFT 10. A liquid crystal, having negative dielectric anisotropy, which is driven in a vertical alignment mode such as a VA mode and an MVA mode is filled between the TFT substrate and the color filter substrate. This causes a liquid crystal layer LC to be provided. A cell thickness, which is the thickness of the liquid crystal layer LC, is set to 3.4μm, for example. The cell thickness is preferably set to not less than 2.8μm and not more than 10μm.

Vertical alignment films 51 are further provided on the TFT substrate and the color filter substrate, respectively. In Fig. 2, the vertical alignment film 51 on the TFT substrate side is provided so as to cover the entire pattern surface obtained in a situation where the provision of components up to the pixel electrodes 7 has been finished. The vertical alignment film 51 on the color filter substrate side is provided so as to cover the color filter 32a and the black matrix 32b.

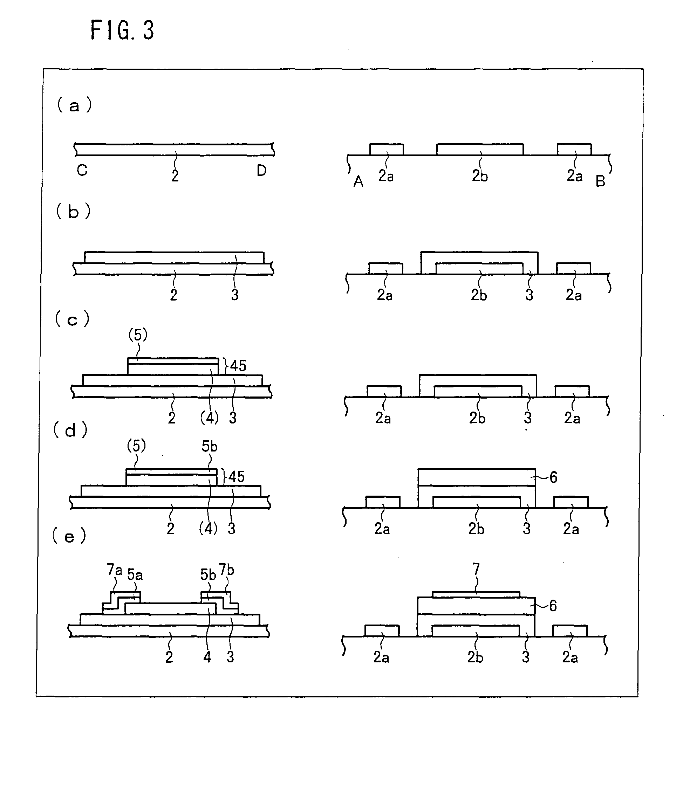

The following description deals with how the TFT substrate of the present invention is produced with reference to Fig. 3.

As shown in Fig. 3(a), in step 1), gate electrodes 2 (gate line GL) of TFTs 10 and capacitor electrodes 2a and 2b are concurrently formed on a glass substrate 31. At this point, the capacitor line Cs is also concurrently formed. As shown in Fig. 3(b), in step 2), gate insulating films 3 and insulating films 3 are concurrently formed on the gate electrodes 2 and the capacitor electrodes 2b, respectively. As shown in Fig. 3(c), in step 3), a lamination 45 including layers (4) to become channel forming regions 4 of the TFTs 10 and layers (5) to become source regions 5a and drain regions 5b is stacked. As shown in Fig. 3(d), in step 4), insulating films 6 are formed on insulating films 3 provided on the capacitor electrodes 2b. At this point, the insulating films 6 are concurrently formed by a coating method on the insulating films 3 of the gate lines GL on which no TFT 10 is provided (not shown). A spin coating method and a slit coating method are used for applying the insulating films 6. After material liquid is applied, unnecessary parts of a pattern exposed to light are removed by a development, and then the remained parts of the pattern are hardened by baking, thereby forming the insulating films 6. As shown in Fig. 3(e), in step 5), first, materials of source electrodes and drain electrodes are deposited on the layers to become the source regions 5a and the drain regions 5b of the TFTs 10, respectively. Next, photo resist is applied to the deposited materials of the source regions 5a and the drain regions 5b, exposure and development are carried out so that certain patterns are obtained. Then, a dry etching or a wet etching is carried out while the photo resist is made use of as a mask so that source electrodes 7a and drain electrodes 7b are concurrently formed. In this regard, it is preferable to carry out a dry etching which causes less etching shift. At this point, source lines SL are concurrently formed. Further, a dry etching is carried out with respect to the layer (5) to become the source regions 5a and the drain regions 5b, whose surfaces are exposed due to the formation of the source electrodes 7a and the drain electrodes 7b. This causes the source regions 5a and the drain regions 5b to be formed. Additionally, pixel electrodes 7 are made of the same material as the gate line GL. Consequently, a stacked structure for driving the TFTs 10 and the liquid crystal layer LC is completed.

Further, a vertical alignment film is formed on the TFT substrate that has been completed, and then the TFT substrate is bonded to the color filter substrate on which a vertical alignment film is formed. A negative liquid crystal (for VA mode), that is, a liquid crystal having negative dielectric anisotropy is filled between the TFT substrate and the color filter substrate. This results in that a liquid crystal display panel is assembled. The liquid crystal display panel can be formed by mounting, on a panel, the respective drivers shown in Fig. 4 prepared as an IC and by using amorphous silicon as the pixel 1. Alternatively, the liquid crystal display panel can be formed by preparing the respective drivers shown in Fig. 4 and the pixel 1 so that the drivers and the pixel 1 are integral with each other, and by using polycrystal silicon or CG silicon as the pixel 1.

As described above, according to the present embodiment, electrodes via which a voltage is applied across a liquid crystal are provided on a TFT substrate as capacitor electrodes 2a and pixel electrodes 7. A plurality of the capacitor electrodes 2a are provided along a substrate surface at intervals. The pixel electrodes 7 are provided along the substrate surface and between adjacent capacitor electrodes 2a so as to be at a higher height from the substrate surface than the capacitor electrodes 2a. Therefore, when a TFT turns on in response to a voltage via a gate line GL, resulting in that a source line SL is connected to a pixel electrode 7 so that a voltage is applied across a liquid crystal between the capacitor electrodes 2a and the pixel electrodes 7, the capacitor electrodes 2a and the pixel electrodes 7 function as electrodes on which electric field is concentrated. At this point, in a pixel 1, a voltage is applied across a liquid crystal between the capacitor electrodes 2a and the pixel electrodes 7, and no voltage is applied across a liquid crystal between the capacitor electrodes 2a and capacitor electrodes 2b.

Therefore, it is possible to realize an arrangement in which a voltage is applied across a liquid crystal in a thickness direction of a liquid crystal layer LC, only by forming, on the TFT substrate, the capacitor electrodes 2a, an insulating layer extending from the substrate surface to the pixel electrodes 7, the pixel electrodes 7, and a vertical alignment film, and then by filling, between the TFT substrate and a color filter substrate, with a liquid crystal having negative dielectric anisotropy. Moreover, it is not necessary to provide an electrode on a substrate (the color filter substrate) which is provided so as to face the TFT substrate.

With the arrangement described above, it is possible to achieve a TFT substrate, whose producing processes are simplified, for use in a liquid crystal display device in which electric field concentrating patterns of electrodes, via which a voltage is applied across a liquid crystal, are alternately provided at different heights in the thickness direction of the liquid crystal layer.

Further, according to the present embodiment, the capacitor electrodes 2b connected to the capacitor electrodes 2a via the insulating layer are provided on the substrate surface side of the pixel electrodes 7. This causes the capacitor electrodes 2b to form a capacitance between the capacitor electrodes 2b and the pixel electrodes 7 via the insulating layer. As such, it is possible to provide an electrode which functions as a storage capacitor electrode.

Moreover, according to the present embodiment, the capacitor electrodes 2a, the capacitor electrodes 2b, the gate lines GL, and the gate electrodes 2 of the TFTs 10 are concurrently formed with a same material, and the pixel electrodes 7 are formed with the same material as the gate line GL. Therefore, it is possible to easily reduce the whole number of layers on the TFT substrate and to easily simplify the process.

Furthermore, according to the present embodiment, the gate insulating film 3 of the TFT 10 is made of the same material as and concurrently formed with the insulating film 3 which is part of an insulating layer between the pixel electrodes 7 and the capacitor electrodes 2b and is formed subsequently after the capacitor electrodes 2b are formed. Therefore, in a case where the capacitor electrodes 2b are formed, it is also possible to easily reduce the whole number of layers on the TFT substrate and to easily simplify the process.

The following description deals with a comparison of a method for driving a display panel with a pixel arrangement of the present embodiment and for a method for driving a display panel with a conventional pixel arrangement.

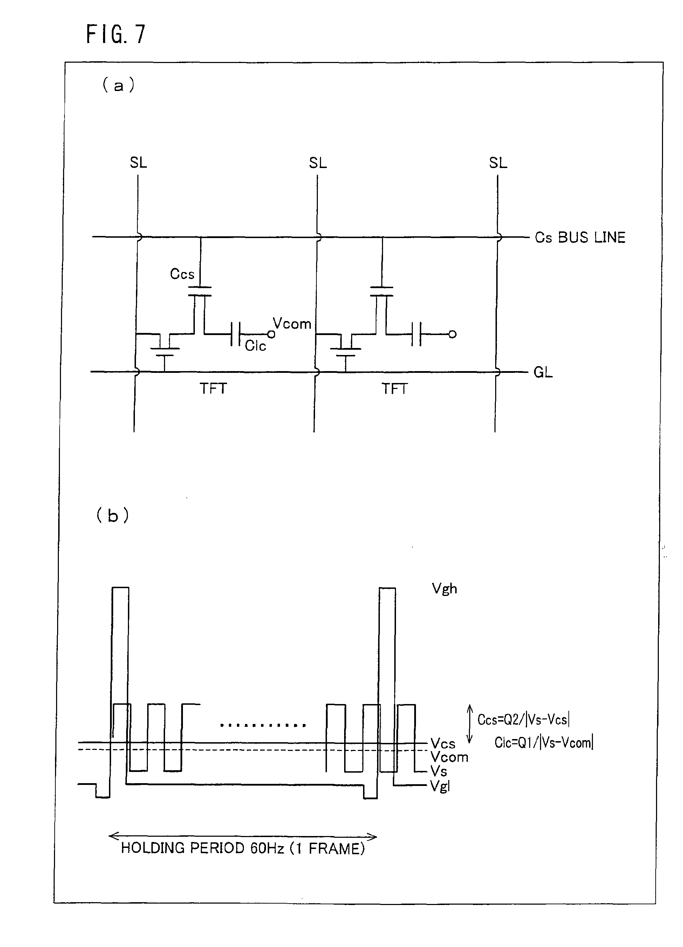

Fig. 7(a) shows an equivalent circuit of a conventional pixel arrangement. In the conventional pixel arrangement, a liquid crystal capacitance Clc is formed which is defined by a counter electrode having an electric potential Vcom, a pixel electrode connected to a drain electrode of a TFT, and a liquid crystal layer sandwiched by the counter electrode and the drain electrode. And, a storage capacitance Ccs is formed which is defined by the pixel electrode and a Cs bus line having a storage capacitor electric potential Vcs. Fig. 7(b) shows drive voltage waveform in this case. Fig. 7(b) is a waveform chart obtained when a display panel is subjected to a dot-inversion driving (which driving is effective for omitting a gate substrate). In Fig 7(b), a source electric potential Vs is indicated by rectangular wave having an amplitude of 0 to 8Vrms, a storage capacitor electric potential Vcs is indicated by DC wave having an amplitude of 0 to 2.5V, an electric potential Vcom is indicated by DC wave having an amplitude of 0 to 2.5V, and a gate electric potential Vg is indicated by rectangular wave having an amplitude of -10(Vgl) to 35(Vgh)V. A holding period of a pixel electrode electric potential is one frame period (60Hz).

The liquid crystal capacitance Clc is represented by the following equation, where stored charges of the liquid crystal capacitance Clc are indicated by Q1.

$$Clc = Q1 \; / \; |Vs - Vcom \;|$$

The storage capacitance Ccs is represented by the following equation, where stored charges of the storage capacitance Ccs are indicated by Q2.

$$Ccs = Q2 \; / \; |Vs - Vcs|$$

Note that, accompanying capacitance is generated and added to the liquid crystal capacitance Clc when Kerr effect is generated in the liquid crystal layer in response to application of voltage. In addition, the storage capacitance Ccs is for aiding the liquid crystal capacitance Clc while Kerr effect is being generated in the liquid crystal layer.

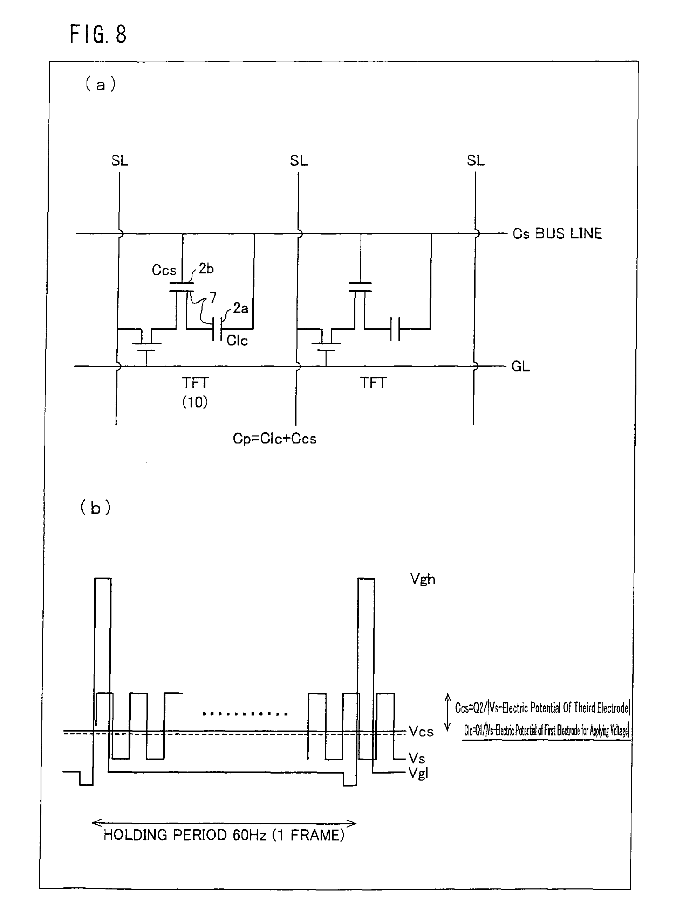

Fig. 8(a) shows an equivalent circuit of a pixel arrangement of the present embodiment. In the pixel arrangement of the present embodiment, an liquid crystal capacitance Clc is formed which is defined by a pixel electrode 7 connected to a drain electrode of TFT and a capacitor electrode 2a connected to a Cs bus line (that is, the capacitor line Cs) of a storage capacitor electric potential Vcs. In addition, a storage capacitance Ccs is formed which is defined by the pixel electrode 7 and a capacitor electrode 2b connected to the Cs bus line. Fig. 8(b) shows drive voltage waveform in this case. Fig. 8(b) is a waveform chart obtained when a display panel is subjected to a dot-inversion driving (which driving is effective for omitting a gate substrate). In Fig. 8(b), a source electric potential Vs is indicated by rectangular wave having an amplitude of 0 to 8Vrms, a storage capacitor electric potential Vcs is indicated by DC wave having an amplitude of 0 to 2.5V, a gate electric potential Vg is indicated by rectangular wave having an amplitude of -10(Vgl) to 35(Vgh)V. A holding period of a pixel electrode electric potential is one frame period (60Hz).

The liquid crystal capacitance Clc is represented by the following equation, where stored charges of the liquid crystal capacitance Clc are indicated by Q1.

$$Clc \; = \; Q1 \; / \; |Vs - electric\; potential\; of\; capacitor$$
$$electrode\; 2a\; (first\; electrode\; for\; applying\; voltage)|$$

The storage capacitance Ccs is represented by the following equation, where stored charges of the storage capacitance Ccs are indicated by Q2.

$$Ccs \; = \; Q2/ \; |Vs - electric\; potential\; of\; capacitor$$
$$electrode\; 2b\; (third\; electrode)|$$

Note that capacitance is generated and added to the liquid crystal capacitance Clc while Kerr effect is being generated in the liquid crystal layer in response to application of voltage. In addition, the storage capacitance Ccs is capacitance for aiding the liquid crystal capacitance Clc when Kerr effect is being generated in the liquid crystal layer.

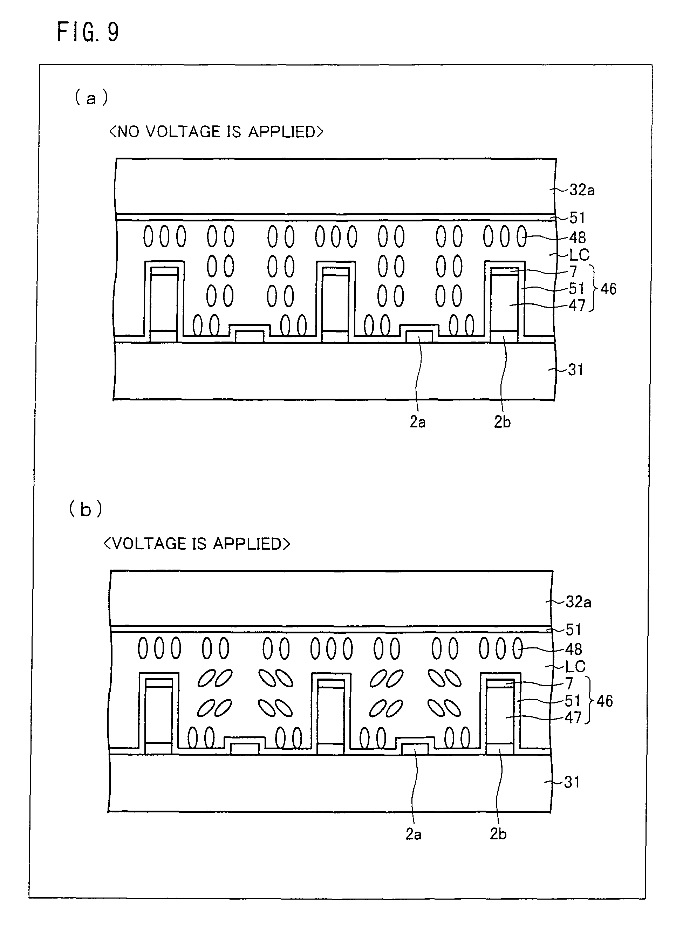

Figs. 9 through 11 show how the liquid crystal molecules response depending on how the first electrodes for applying voltage are arranged in the pixel arrangement of the present embodiment. Note that members having the same reference numerals as those in Fig. 2 have the same functions as those in Fig. 2 unless otherwise noted.

Fig. 9 shows a pixel arrangement in which a liquid crystal layer LC is driven in a vertical alignment mode, and in which (i) protruding sections 46 each including a pixel electrode (second electrode for applying voltage) 7 at its upper part and (ii) capacitor electrodes (first electrodes for applying voltage) 2a are alternately provided on a glass substrate 31. Fig. 9(a) shows a state in which no voltage is applied across the liquid crystal layer LC. Fig. 9(b) shows a state in which a voltage is applied across the liquid crystal layer LC. The structure in Fig. 9 is same as that in Fig. 2. Each of the protruding sections 46 includes a capacitor electrode 2b which is provided so as to be on an upper surface of the glass substrate 31, and an insulating film 47 so that it is provided between the pixel electrode 7 and the capacitor electrode 2b. In Fig. 9(a), liquid crystal molecules 48 in the liquid crystal layer LC align perpendicularly in accordance with vertical alignment films 51·51.

While a voltage is being applied across the liquid crystal layer LC, the liquid crystal molecules 48 incline in response to an electric field generated between the pixel electrodes 7 and the capacitor electrodes 2a (see Fig. 9(b)). In this regard, in a case where the pixel electrodes 7 and the capacitor electrodes 2a are provided at wide intervals, electric flux lines are concentrated on a small area. This causes only the liquid crystal molecules 48 located around the electrodes incline. It should be noted that only small electric field or no electric field is generated, in regions above the pixel electrodes 7 and in other regions located at the same height as the regions above the pixel electrodes 7 in the liquid crystal layer LC. As such, the liquid crystal molecules 48 do not respond to the electric field, and therefore do not contribute to a display. In addition, (i) oblique electric field generated in an region between a capacitor electrode 2a and adjacent one of pixel electrodes 7 and (ii) oblique electric field generated in an region between the capacitor electrode 2a and adjacent the other one of the pixel electrodes 7 have axisymmetric distributions. This causes the liquid crystal molecules 48 to incline, in the two regions, in directions opposite to each other. The larger electric field is applied across the liquid crystal layer LC, the closer inclination angle to 90 degree the liquid crystal molecules 48 will have.

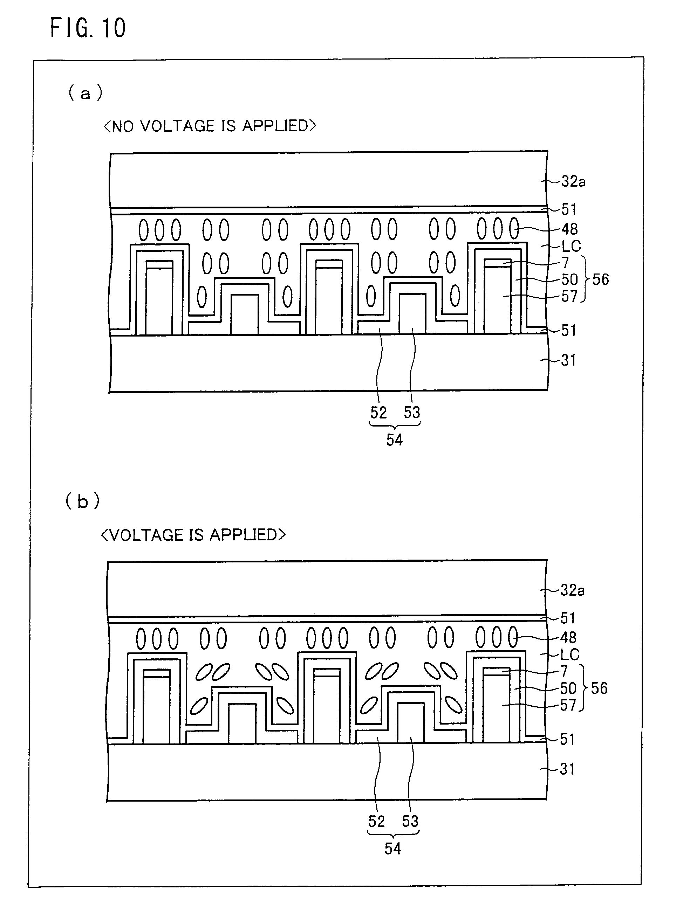

In view of the arrangement shown in Fig. 9, Fig. 10 shows a pixel arrangement in which (i) protruding sections 56 each including a pixel electrode (second electrode for applying voltage) 7 at its upper part and (ii) protruding sections 54 each covered with a capacitor electrode (first electrode for applying voltage) 52 which is a transparent electrode are alternately provided. Fig. 10(a) shows a state in which no voltage is applied across a liquid crystal layer LC. Fig. 10(b) shows a state in which a voltage is applied across the liquid crystal layer LC.

Each of the protruding sections 56 includes an insulator 57, having a protruding shape, which is provided on a glass substrate 31, a pixel electrode 7 provided on the insulator 57, and a passivation film 50 covering an upper surface and/or a side surface of the insulator 57 and the pixel electrode 7. The passivation film 50 is a $SiN_x$ film, for example. Each of the protruding sections 54 includes an insulator 53 having a protruding shape and having a certain height from an upper surface of the glass substrate 31 (that is, from an upper surface of a TFT substrate), and a capacitor electrode 52 provided so as to cover the insulator 53 and the upper surface of the glass substrate 31 located around the insulator 53. The pixel electrodes 7 are provided at a higher height from the upper surface of the glass substrate 31 than the capacitor electrodes 52. In this embodiment, each of the capacitor electrodes 52 covers substantially the whole area of the upper surface of the glass substrate 31 between adjacent protruding sections 56, except an area where the insulator 53 is provided. Each of the passivation films 50 has a function of preventing the pixel electrode 7 from corroding due to a patterning of the capacitor electrodes 52, in a case where such patterning is carried out with respect to the capacitor electrodes 52 after the pixel electrodes 7 are formed. In addition, a vertical alignment film 51 is formed on the whole area of the TFT substrate so as to cover the protruding sections 56 and 54.

Further, the capacitor electrodes 52 are connected to a capacitor line Cs with the use of a contact technique. This causes, as shown in Fig. 10(b), the pixel electrodes 7 and the capacitor electrodes 52 to function as electrodes on which electric field is concentrated, while the electric field is being generated, in response to application of a voltage to a liquid crystal layer LC, between the pixel electrodes 7 and the capacitor electrodes 52. In this regard, the range of electric flux lines caused by the electric field widely extends, as compared with the arrangement shown in Fig. 9, in a director direction in which the liquid crystal molecules 48 incline. This causes an increase in number of the liquid crystal molecules 48 that contribute to a display. Moreover, since transparent electrodes are used as the first electrodes, light entering from the backside of the TFT substrate is not interrupted. As a result, the brightness of a display is dramatically improved.

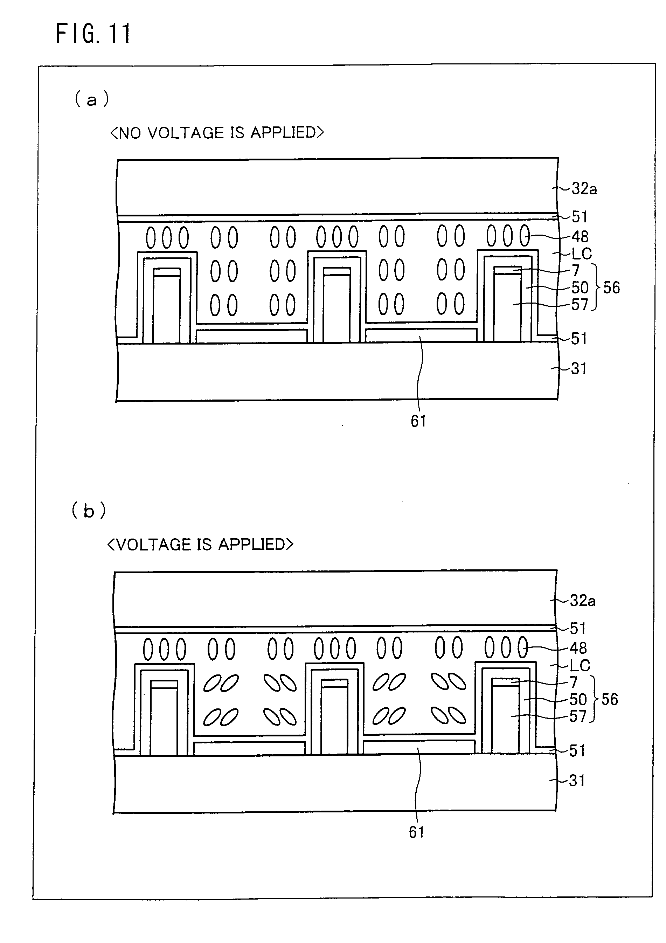

In view of the arrangement shown in Fig. 9, Fig. 11 shows an arrangement in which capacitor electrodes (first electrodes for applying voltage) 61, instead of protruding sections 54 shown in Fig. 10, are provided in a planar form on an upper surface of a glass substrate 31 (that is, an upper surface of a TFT substrate) between adjacent protruding sections 56. Fig. 11(a) shows a state in which no voltage is applied across a liquid crystal layer LC. Fig.11 (b) shows a state in which a voltage is applied across the liquid crystal layer LC.

In this embodiment, each of the capacitor electrodes 61 covers substantially the whole area of the upper surface of the glass substrate 31 between adjacent protruding sections 56. The pixel electrodes 7 are provided at a higher height from the upper surface of the glass substrate 31 than the capacitor electrodes 61. This also causes, as shown in Fig.

11(b), the pixel electrodes 7 and the capacitor electrodes 61 to function as electrodes on which electric field is concentrated, while the electric field is being generated, in response to application of a voltage to the liquid crystal layer LC, between the pixel electrodes 7 and the capacitor electrodes 61. In this regard, the range of electric flux lines caused by the electric field widely extends, as compared with the arrangement shown in Fig. 9, in a director direction in which the liquid crystal molecules 48 incline. This causes an increase in number of the liquid crystal molecules 48 that contribute to a display. Moreover, since transparent electrodes are used as the first electrodes, light entering from the backside of the TFT substrate is not interrupted. As a result, the brightness of a display is dramatically improved.

Each of the liquid crystal display devices shown in Figs. 2 and 9 through 11 includes a liquid crystal display panel in which a TFT substrate and a counter substrate that does not include a counter electrode facing the TFT substrate, and in which a liquid crystal is driven in an MVA mode. With the arrangement, it is possible to provide a liquid crystal display device, adopting an MVA driving system, in which a counter substrate has a simplified arrangement. This is based on the following fact. The liquid crystal can be driven in an MVA driving mode by causing the liquid crystal layer LC to have multiple domains while the electric field generated, in a direction oblique to the thickness direction of the liquid crystal layer LC, between the first electrodes for applying voltage and the second electrodes for applying voltage on the TFT substrate side is used. As such, it is possible to provide such a liquid crystal display device, by driving the liquid crystal without providing any counter electrode on the counter substrate.

In order to cause the liquid crystal layer LC to have the multiple domains, the first electrodes and the second electrodes are provided so as to extend in parallel with each other on the TFT substrate, as shown in Fig. 1.

Since the first electrodes and the second electrodes are provided so as to extend in parallel with each other on the TFT substrate, it is possible to generate the oblique electric field, having a distribution whose direction and intensity are uniform in the direction in which the first and second electrodes extend, between adjacent first and second electrodes. In consequent, as described with reference to Figs. 9 through 11, liquid crystal molecules 48 incline in the same direction in a region between adjacent first and second electrodes so that a domain is formed in this region. Further, the liquid crystal molecules 48 in the adjacent regions incline in directions opposite to each other because the oblique electric field in a region and that in an adjacent region become axisymmetric. This allows different domains to be formed in the adjacent regions, respectively. Therefore, it is possible to easily cause the liquid crystal layer to have multiple domains. In Fig. 1, for example, a single pixel region has two half regions that are symmetrical to each other with respect to the capacitor line Cs. This causes each of the two half regions to have different two kinds of domains, thereby forming four kinds of domains in total.

Since domains can be formed by each oblique electric field as described above, as shown in Figs. 2 and 9 through 11, it is possible to provide a liquid crystal display device, adopting an MVA driving system, which has an extremely simplified arrangement by omitting an arrangement, in the counter substrate, for controlling an alignment of liquid crystal.

In addition, it is particularly preferable in each of the domains to cause no horizontal electric field parallel to the substrate surface to be generated, in a region which is closer to the TFT substrate than the second electrode, between the first and second electrodes, the horizontal electric field allowing the liquid crystal molecules 48 to align. By causing no horizontal electric field, which allows the liquid crystal molecules 48 to align, parallel to the substrate surface to be generated in the region, that is, in a region where the liquid crystal molecules 48 contributing to a display exist, it is possible to avoid that a region where the liquid crystal molecules 48 perpendicularly align occurs although a voltage is applied between the first electrodes and the second electrodes. Thus, it is possible to achieve a high-quality display in an MVA mode.

As described above, a TFT substrate of the present invention is a TFT substrate, for use in a liquid crystal display panel driven by a scanning signal line driving circuit and a data signal line driving circuit, having TFTs, scanning signal lines, and data signal lines, wherein, in each pixel: a plurality of first electrodes for applying voltage are provided along a substrate surface at intervals; second electrodes for applying voltage are provided along the substrate surface, the second electrodes being provided between adjacent first electrodes so as to be at a higher height from the substrate surface than the first electrodes; third electrodes that are connected to the first electrodes are provided, respectively, on the substrate surface side of the second electrodes; and when a TFT turns on in response to a voltage via a scanning signal line, a data signal line is connected to a second electrode so that (i) a voltage is applied across a liquid crystal between the first electrodes and the second electrodes and (ii) no voltage is applied across the liquid crystal between the first electrodes and the third electrodes.

With the arrangement above, it is possible to achieve a TFT substrate, whose producing processes are simplified, for use in a liquid crystal display device in which electric field concentrating patterns of electrodes, via which a voltage is applied across a liquid crystal, are alternately provided at different heights in a thickness direction of a liquid crystal layer.

The concrete embodiments and examples discussed in the foregoing detailed explanation serve solely to illustrate the technical details of the present invention, which should not be narrowly interpreted within the limits of such embodiments and examples, but rather may be applied in many variations within the spirit of the present invention and the scope of the patent claims set forth below.

INDUSTRIAL APPLICABILITY

The present invention can be suitably used in a liquid crystal display device having wide viewing angle characteristics.

**Claims**

1. A TFT substrate, for use in a liquid crystal display panel driven by a scanning signal line driving circuit and a data signal line driving circuit, comprising TFTs, scanning signal lines, and data signal lines, wherein, in each pixel:

   a plurality of first electrodes for applying voltage are provided along a substrate surface at intervals;
   second electrodes for applying voltage are provided along the substrate surface, the second electrodes being provided between adjacent first electrodes so as to be at a higher height from the substrate surface than the first electrodes;
   third electrodes that are connected to the first electrodes are provided, respectively, on the substrate surface side of the second electrodes; and
   when a TFT turns on in response to a voltage via a scanning signal line, a data signal line is connected to a second electrode so that (i) a voltage is applied across a liquid crystal between the first electrodes and the second electrodes and (ii) no voltage is applied across the liquid crystal between the first electrodes and the third electrodes.

2. The TFT substrate according to claim 1, wherein the third electrodes are provided on the substrate surface side of the second electrodes, via an insulating layer.

3. A TFT substrate, for use in a liquid crystal display panel driven by a scanning signal line driving circuit and a data signal line driving circuit, comprising TFTs, scanning signal lines, and data signal lines, wherein, in each pixel:

   a plurality of first electrodes for applying voltage are provided along a substrate surface at intervals;
   second electrodes for applying voltage are provided along the substrate surface, the second electrodes being provided between adjacent first electrodes so as to be at a higher height from the substrate surface than the first electrodes;
   when a TFT turns on in response to a voltage via a scanning signal line, a data signal line is connected to a second electrode so that a voltage is applied across a liquid crystal between the first electrodes and the second electrodes; and
   the first electrodes are transparent electrodes, and are provided so as to cover a protruding insulator and the substrate surface located around the insulator.

4. A TFT substrate, for use in a liquid crystal display panel driven by a scanning signal line driving circuit and a data signal line driving circuit, comprising TFTs, scanning signal lines, and data signal lines, wherein, in each pixel:

   a plurality of first electrodes for applying voltage are provided along a substrate surface at intervals;
   second electrodes for applying voltage are provided along the substrate surface, the second electrodes being provided between adjacent first electrodes so as to be at a higher height from the substrate surface than the first electrodes;
   when a TFT turns on in response to a voltage via a scanning signal line, a data signal line is connected to a second electrode so that a voltage is applied across a liquid crystal between the first electrodes and the second electrodes; and
   the first electrodes are transparent electrodes, and are provided so as to be in a planar form on the substrate surface between adjacent second electrodes.

5. The TFT substrate according to any one of claims 1 through 4, wherein the liquid crystal is a liquid crystal driven in a vertical alignment mode.

6. The TFT substrate according to claim 5, wherein the liquid crystal layer has a thickness of not less than $2.8\mu$m and not more than $10\mu$m.

7. A method for producing a TFT substrate recited in claim 1, comprising:

concurrently forming, with a same material, the first electrodes, the third electrodes, the scanning signal lines, and gate electrodes of the TFTs; and

forming the second electrodes with the same material as the scanning signal lines after forming the first electrodes.

**8.** The method according to claim 7, further comprising:

concurrently forming, with a same material, (i) an insulating film which is part of an insulating layer between the second electrodes and the third electrodes and is subsequently formed after the third electrodes are formed and (ii) a gate insulating film of the TFTs.

**9.** A liquid crystal display panel comprising a TFT substrate recited in any one of claims 1 through 6.

**10.** A liquid crystal display device comprising a liquid crystal display panel recited in claim 9.

**11.** The liquid crystal display device according to claim 10, wherein:

the liquid crystal display panel is composed of a combination of the TFT substrate and a counter substrate that does not include a counter electrode facing the TFT substrate; and

the liquid crystal is driven in an MVA mode.

**12.** The liquid crystal display device according to claim 11, wherein:

on the TFT substrate, the first electrodes and the second electrodes are provided along the substrate surface so as to run parallel to each other; and

the counter substrate does not include a structure for controlling an alignment of liquid crystal molecules.

**13.** The liquid crystal display device according to claim 11 or 12, wherein no horizontal electric field parallel to the substrate surface that causes the liquid crystal molecules to align is generated in a region that (i) is between the first electrodes and the second electrodes and (ii) is closer to the substrate surface than the second electrodes.

FIG. 1

## FIG. 2

(a)

(b)

(c)

# FIG. 3

(a)

(b)

(c)

(d)

(e)

# FIG. 4

EP 2 051 135 A1

FIG. 5

FIG. 6

(a)

(b)

(c)

# FIG. 7

(a)

(b)

# FIG. 8

(a)

SL        SL        SL

Cs BUS LINE

Ccs  2b

7   2a

Clc

TFT
(10)

TFT

GL

Cp=Clc+Ccs

(b)

Vgh

············

Ccs=Q2/|Vs–Electric Potential Of Theird Electrode|

Vcs

Clc=Q1/|Vs–Electric Potential of First Electrode for Applying Voltage|

Vs

Vgl

HOLDING PERIOD 60Hz (1 FRAME)

# FIG. 9

(a)

\<NO VOLTAGE IS APPLIED\>

(b)

\<VOLTAGE IS APPLIED\>

# FIG. 10

(a)

<NO VOLTAGE IS APPLIED>

~32a
51
48
LC
7
50 } 56
57
51
31

52 53
54

(b)

<VOLTAGE IS APPLIED>

~32a
51
48
LC
7
50 } 56
57
51
31

52 53
54

# FIG. 11

(a)

<NO VOLTAGE IS APPLIED>

(b)

<VOLTAGE IS APPLIED>

**INTERNATIONAL SEARCH REPORT**

| | International application No. |
|---|---|
| | PCT/JP2007/061997 |

A. CLASSIFICATION OF SUBJECT MATTER
*G02F1/1368*(2006.01)i, *G02F1/1343*(2006.01)i

According to International Patent Classification (IPC) or to both national classification and IPC

B. FIELDS SEARCHED

Minimum documentation searched (classification system followed by classification symbols)
G02F1/1368, G02F1/1343

Documentation searched other than minimum documentation to the extent that such documents are included in the fields searched
Jitsuyo Shinan Koho       1922-1996   Jitsuyo Shinan Toroku Koho   1996-2007
Kokai Jitsuyo Shinan Koho  1971-2007   Toroku Jitsuyo Shinan Koho   1994-2007

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br>A | JP 11-316383 A  (Samsung Electronics Co., Ltd.),<br>16 November, 1999 (16.11.99),<br>Full text; Figs. 1 to 99<br>& US 6577368 B1 | 4-6,9,10<br>1-3,7-8,<br>11-13 |
| P,X | JP 2007-86205 A  (Sharp Corp.),<br>05 April, 2007 (05.04.07),<br>Full text; Figs. 1 to 27<br>(Family: none) | 4,9-10 |
| A | JP 2002-296608 A  (Hitachi, Ltd.),<br>09 October, 2002 (09.10.02),<br>Full text; Figs. 1 to 22<br>& US 2002/0140649 A1 | 1-13 |

☐ Further documents are listed in the continuation of Box C.      ☐ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search<br>11 July, 2007 (11.07.07) | Date of mailing of the international search report<br>24 July, 2007 (24.07.07) |
|---|---|
| Name and mailing address of the ISA/<br>Japanese Patent Office | Authorized officer |
| Facsimile No. | Telephone No. |

Form PCT/ISA/210 (second sheet) (April 2005)

27

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2001083517 A
- JP TOKUKAI200183517 B
- JP 9244046 A
- JP TOKUKAIHEI9244046 B
- JP 2000056325 A
- JP TOKUKAI200056325 B